# EUROPEAN PATENT SPECIFICATION

(11) **EP 2 405 715 B1**
(45) Date of publication and mention of the grant of the patent: **09.09.2015**
(21) Application number: 10748795.1
(22) Date of filing: 04.03.2010
(51) Int. Cl.: H05B 6/12, H05B 6/06

(54) **INDUCTION-HEATING COOKING SYSTEM**
INDUKTIONSWÄRME-KOCHSYSTEM
SYSTÈME DE CUISSON À CHAUFFAGE PAR INDUCTION

(30) Priority: 06.03.2009 JP 2009053562
(43) Date of publication of application: 11.01.2012
(73) Proprietor: Mitsubishi Electric Corporation, Tokyo 100-8310 (JP); Mitsubishi Electric Home Appliance Co., Ltd., Fukaya-shi, Saitama 369-1295 (JP)
(72) Inventor: TAKESHITA, Miyuki, Tokyo 100-8310 (JP); MATSUDA, Tetsuya, Tokyo 100-8310 (JP); SUGA, Ikuro, Tokyo 100-8310 (JP); TANAKA, Kazufumi, Tokyo 100-8310 (JP); KINOSHITA, Hirokazu, Saitama 369-1295 (JP)
(74) Representative: Popp, Eugen
(86) International application number: PCT/JP2010/053493
(87) International publication number: WO 2010/101202

(56) References cited:
- EP-A1- 0 722 261
- DE-A1-102004 003 126
- JP-A- 8 078 148
- JP-A- H1 027 681
- JP-A- 2007 026 789
- JP-A- 2008 159 358
- JP-A- 2008 293 871
- JP-U- 2 095 192

## Description

### Technical Field

The present invention relates to an induction-heating cooking system having a plurality of induction heating coils.

### Background Art

In the induction-heating cooking system such as a IH cooker, an alternating current having frequency of several tens of kHz is supplied to a heating coil convolved in a planar configuration so as to generate an alternating magnetic field effecting an eddy current within a cooking pan or pot (heated body) made of conductive material, thereby to heat the cooking pan.

For example, Patent Document 1 (JP 11-214138, A) describes an induction heating cookware having radially divided inner and outer induction heating coils, in which both of the induction heating coils are supplied with high-frequency current for the cooking pan having typical size, while only the inner induction heating coil is supplied with high-frequency current for the cooking pan having a small size, upon switching to small-pan mode by means of a control switch. This reduces magnetic flux or energy from the outer induction heating coil which gives little contribution for heating the small pan.

Also, Patent Document 2 (JP 02-045313, B) describes an induction heating cooking device having radially divided inner and outer induction heating coils, in which if the pan is set off the center of the heating coils, only the inner induction heating coil is supplied with high-frequency current for the pan while the outer induction heating coil is supplied with no high-frequency current. This minimizes loss of magnetic energy from the outer induction heating coil, of which portion is not covered by the pan.

Patent Document 3 (JP Utility Model 07-22876, B) discloses a magnetic-field generator used for an induction heating cooking device, which includes a central convoluted coil and six of peripheral convoluted coils surrounding thereof. Each of central and peripheral convoluted coils is connected in parallel to a power supply. If there is a certain difference detected between the currents through the convoluted coils, which is greater than a predetermined threshold, then a heated object (cooking pan) is determined as not being suitable to be heated and no or little current is supplied to all of the convoluted coils.

Furthermore, Patent Document 4 (JP 2007-287590, A) discloses a IH stove device including a plurality of induction heating coils each having a small diameter. When the small-sized cooking pan is set on a top plate of the IH stove device, the stove device is adapted to cause only four of the central induction heating coils generate magnetic field but suppress eight of surrounding induction heating coils.

EP 0722261 A1 discloses an induction-heating cooking system according to the preamble of claim 1.

### Summary of Invention

### Problems to be solved by Invention

In the induction heating cookware including the radially-divided heating coils of Patent Document 1, a user is required to determine whether the pan is small or large and to operate or confirm the control switch into the small-pan mode, which forces him/her a cumbersome task.

Also, the induction heating cooking device of Patent Document 2 may actually minimize loss of magnetic energy from the outer induction heating coil by supplying only the inner induction heating coil with high-frequency current when the pan is set off the center of the heating coils. However, the heating power (capability) of the inner induction heating coil alone is too insufficient to realize the 'fire power' to the pan as the user expects.

In the magnetic-field generator used for an induction heating cooking device according to Patent Document 3, it is adapted to supply no or little current to all of the convoluted coils upon determining the pan as not being suitable to be heated. Thus, as long as the pan is determined as being suitable to be heated, then all of the convoluted coils are supplied with current for heating the pan, and in that case, even if the pan is set off the center of the central heating coil, as all of the convoluted coils are supplied with current, it cannot reduce the magnetic energy which gives no or little affect on heating the pan.

Furthermore, Patent Document 4 fails to disclose and even suggest how to control each of the induction heating coils in case where the pan is set off the center of the IH stove device.

Also, while the heated body such as a cooking pan has different sizes and various profiles such as circular, oval, and rectangular shapes, the conventional induction heating cookers include the induction heating coils in a fixed form so that it cannot efficiently heat the pan in response to size and shape of the pan standing thereon.

In order to address the above-described drawbacks, one object of the present invention is to provide an induction-heating cooking system including a central coil and a plurality of peripheral coils, which selectively supplies the coils beneath the cooking pan with the high-frequency current upon detecting the standing situation (various sizes and profiles as well as deviated standing positions of the pan), thereby to suppress undesired magnetic filed which makes no contribution for heating the pan. Also, another object of the present invention is to provide an induction-heating cooking system, in which amplitude or ON/OFF timing sequence of the high-frequency current which is supplied to each of the heating coils is controlled so that a convection is generated in the ingredients in the pan so as to facilitate uniform heating of the ingredients and suppress overheating of a portion of the ingredients thereby to prevent it from being burnt.

### Means for Solving Problems

An induction-heating cooking system according to the present invention is defined in claim 1.

### Advantage of Invention

According to the present invention, even if the pan having various sizes and profiles is set off the center (proper position), the induction-heating cooking system is operable to heat the pan effectively and suppress undesired magnetic filed which makes no contribution for heating the pan, based upon the standing situation of the heated body.

### Brief Description of Drawings

Fig. 1 is a perspective view schematically illustrating an overall induction-heating cooking system according to the first embodiment of the present invention.
Fig. 2 is a plan view schematically illustrating the induction-heating cooking system of Fig. 1, according to the first embodiment of the present invention.
Fig. 3A is a cross-sectional view of a IH heater of the embodiment, taken along a horizontal plane, and Fig. 3B is an enlarged plan view of a central coil.
Fig. 4 is a cross-sectional view of another IH heater of the modification, similar to Fig. 3.
Fig. 5 is a cross-sectional view of further another IH heater of the modification, similar to Fig. 3.
Fig. 6 is a schematic view showing electrical connection among heating coils, inverter circuitries, a detection circuitry, and a drive controller of the embodiment.
Fig. 7 is a circuit block diagram of a power supply for driving a central coil and each of peripheral coils.
Fig. 8 is a circuit block diagram of another power supply for driving each of inner and outer central coils and peripheral coils.
Figs. 9A-9F are cross-sectional views similar to Fig. 3, showing the standing situation of the pan and the driving condition of the heating coils.
Figs. 10A-10d are cross-sectional views similar to Fig. 3, showing the standing situation of the pan and the driving condition of the heating coils.
Fig. 11 is a timing chart showing an alternate driving process of the inverters of the induction-heating cooking system according to the second embodiment of the present invention.
Figs. 12A and 12B are cross-sectional views, showing the driving condition (ON-conditions) of the heating coils driven by the alternate driving process of Fig. 11.
Fig. 13 is a timing chart showing a radially sequential driving process of the inverters of the induction-heating cooking system. This driving process is not an embodiment of the invention but is presented as an example useful for understanding the invention.
Figs. 14A-14C are cross-sectional views, showing the driving condition (ON-conditions) of the heating coils driven by the alternate driving process of Fig, 13.
Fig. 15 is a timing chart showing a circumferentially sequential driving process of the inverters of the induction-heating cooking system, for driving the inner and outer central coils and each of the peripheral coils.
Fig. 16 is a timing chart showing a circumferentially sequential driving process of the inverter of the induction-heating cooking system, for driving the central coil and each of the peripheral coils.
Figs. 17A-17D are cross-sectional views, showing the driving condition (ON-conditions) of the heating coils driven by the circumferentially sequential driving process of Figs. 15 and 16.
Fig. 18 is a timing chart showing a sequential driving process for driving the pan set off the center.
Figs. 19A-19C are cross-sectional views, showing the driving condition (ON-conditions) of the heating coils driven by the sequential driving process of Fig. 18 for driving the pan set off the center.

### Description of Reference Numerals

1: induction-heating cooking system, 2: housing, 3: top plate, 4: central heater, 5: cooking oven, 6: operating panel, 7: power controlling dial, 8: LCD display, 9a: outtake window, 9b: intake window, 10: IH heater, 20: central coil, 21, 31: inductance, 22, 32: resistance, 30: peripheral coils, 40: power supply, 42: commercial alternating current, 44: converter, 46: smoothing capacitor, 48, 50: inverter circuitry, 52, 54: resonance capacitor, 60: drive controller, 62: detection circuitry (detecting means), 63: current detector, **P**: pan (heated body)

### Description of Embodiments

Referring to attached drawings, embodiments of an induction-heating cooking system according to the present invention will be described herein. In the description, a couple of terms for indicating the directions (for example, "upper", "lower", "right" or "left", etc.) are conveniently used just for facilitating clear understandings, it should not be interpreted that those terms limit the scope of the present invention. Like components are denoted with like reference numerals throughout the description.

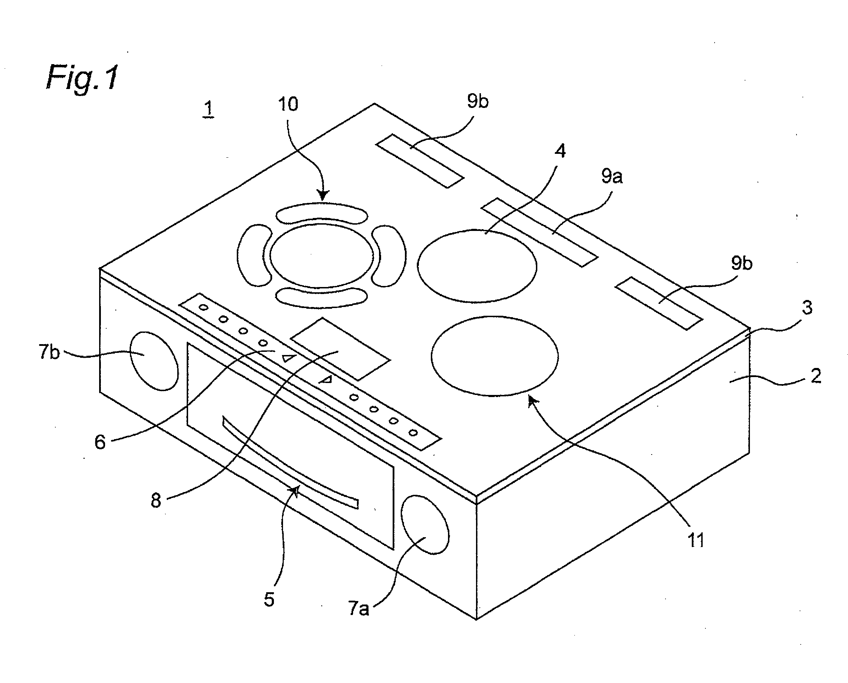

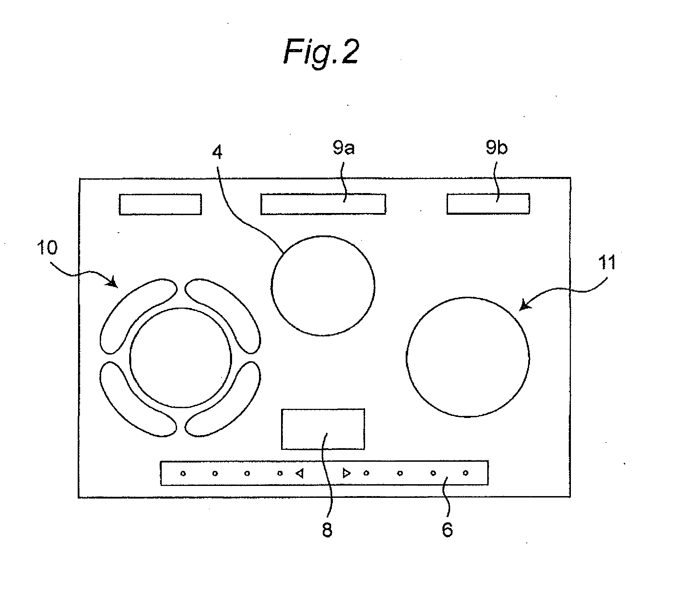

Embodiment 1. With reference to Figs. 1-10, the first embodiment of the induction-heating cooking system will be described herein. Figs. 1 and 2 are perspective view and plan view, respectively, schematically illustrating an overall induction-heating cooking system 1 of the present embodiment. As illustrated in Figs. 1, 2, the induction-heating cooking system 1 includes, in general, a housing 2, a top plate 3 of glass substantially covering the upper surface thereof, a pair of IH heaters 10, 11 arranged closer to the right and left sides of the housing, a central heater 4 positioned in the middle, and a cooking oven 5. The central heater 4 may be designed to use either one of an induction heating coil and a radiant heater.

Also, although only the IH heater 10 shown at the left side in Figs. 1, 2 will be discussed as the IH heater according to the present embodiment, only the IH heater 11 shown at the right side or both of the IH heaters 10, 11 may be adapted as the IH heater according to the present invention. The cooking oven 5 is exemplarily illustrated as being positioned substantially in the middle of the housing 2, which is referred to as a centrally structured oven. However, the present invention is not limited thereto and may equally be adapted to the induction-heating cooking system having the cooking oven 5 positioned closer to either one of the left and right sides of the housing 2, or having even no cooking oven.

The induction-heating cooking system 1 includes an operating panel 6, power controlling dials 7a, 7b allowing a user to operate the IH heaters 10, 11, the central heater 4, and the cooking oven 5. Also it further includes a LCD display 8 for indicating an operating conditions thereof. Further, it includes an outtake window 9a and an intake window 9b arranged close to the back side of the housing 2. Although not illustrated here in detail, the induction-heating cooking system 1 has a built-in power supply 40 for supplying the IH heaters 10, 11 with high-frequency current.

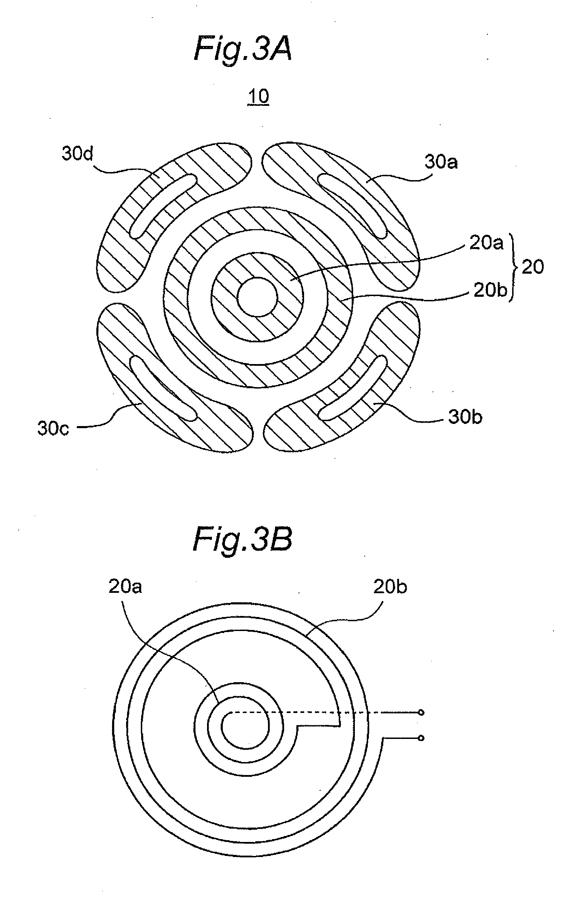

Fig. 3A is a cross-sectional view of the IH heater 10, taken along a plane parallel to the top plate 3. The IH heater 10 includes at least one induction heating coil 20 arranged in the middle thereof (referred to simply as a "central coil" hereinafter) and a plurality (preferably, four or more) of induction heating coils 30a-30d arranged around the central coil 20 (referred to simply as "peripheral coils" hereinafter). Thus, the IH heater 10 is operable to heat a single pan **P** by the at least one central coil 20 in cooperation with the peripheral coils 30a-30d.

As shown in Fig. 3A, the central coil 20 may have two of radially-divided induction heating coils (referred to simply as "inner central coil 20a" and "outer central coil 20b" hereinafter), and the inner central coil 20a and the outer central coil 20b may be electrically connected in series as shown in Fig. 3B, or may be formed integrally as a single heating coil (not shown). When the inner central coil 20a and the outer central coil 20b are connected in series, the central coil 20 is driven by a single inverter (an inverter circuitry), and when they are connected in parallel, each of them may be driven by separate inverters.

Each of the inner central coil 20a and the outer central coil 20b has a circular shape and is made by convolving a conductive line of any metal covered with an insulating material. Each of the peripheral coils 30a-30d has a quarter circle arc (like a banana or cucumber) and made by a similar conductive line along the quarter circle arc. Thus, each of the peripheral coils 30a-30d is arranged so as to extend substantially along quarter circle regions adjacent to the outer central coil 20b.

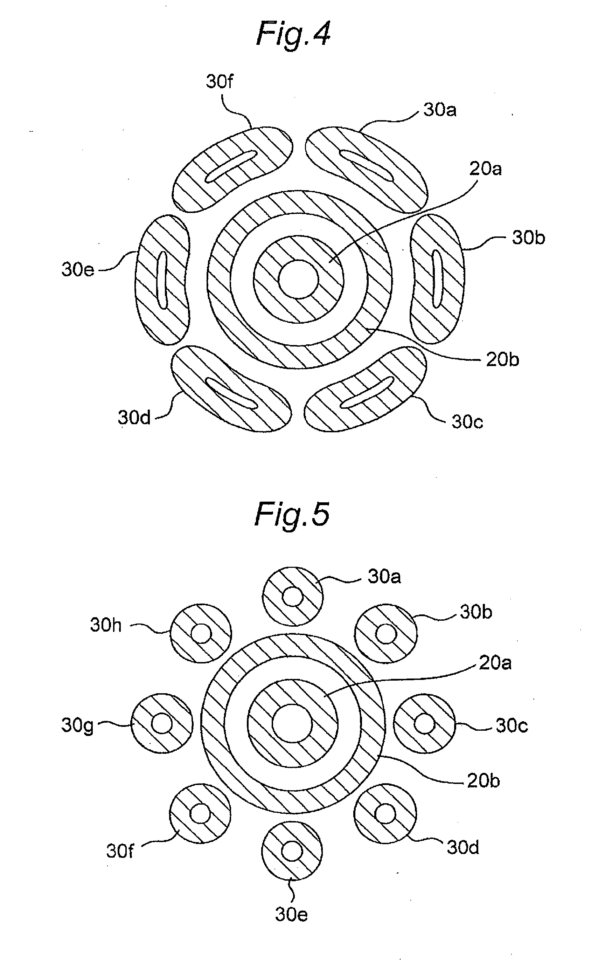

As above, the number of the peripheral coils is not limited to four according to the present invention, rather, six of the peripheral coils may be used as illustrated in Fig. 4. In that case, each of the peripheral coils 30a-30f has an arc of 1/6 circle (shaped like a long ellipse) and is arranged so as to extend substantially along the regions adjacent to the outer central coil 20b. Also, eight of the peripheral coils 30a-30h may be arranged along the outer central coil 20b, each being formed in a circular shape, as shown in Fig. 5. Preferably, the number of the peripheral coils 30 is greater than that of the central coils 20.

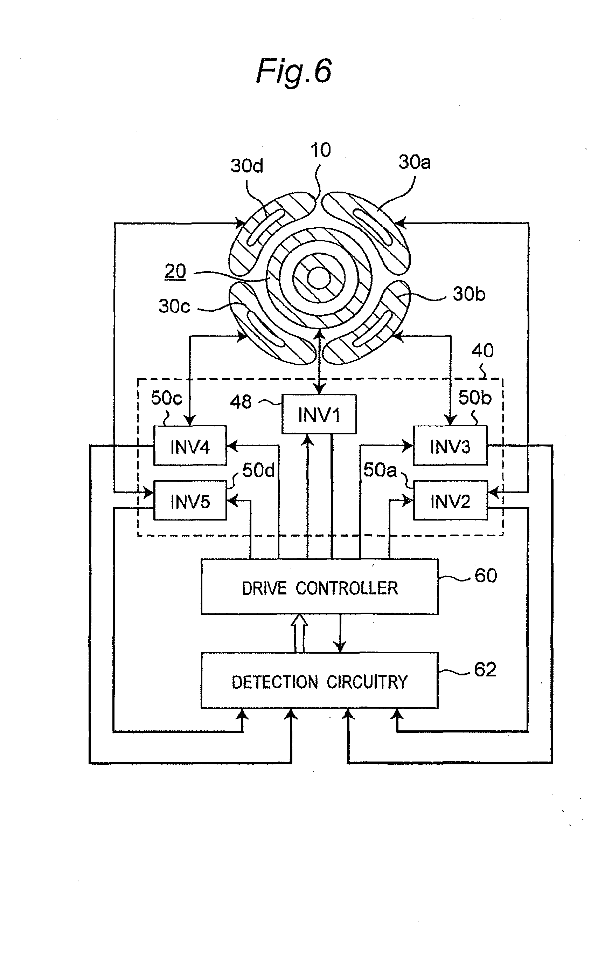

Fig. 6 is a circuit block diagram schematically illustrating electrical connection among the IH heater 10 (including the heating coils 20, 30), the power supply 40 for supplying each of the heating coils with high-frequency current, a detection circuitry (detecting means) 62 for detecting standing situation of the heated object such as a pan **P**, and a drive controller 60 for controlling the power supply 40 based upon outputs from the detection circuitry 62. In drawings, similar reference numerals are used for denoting components having similar functions. As shown in Fig. 6, the power supply 40 is designed to supply each of the heating coils 20, 30 composing the IH heater 10 individually with electric power. In Fig. 6, the IH heater 10 includes the central coil 20 and four of peripheral coils 30 (five heating coils in total), and thus, the power supply 40 includes five of inverter circuitries 48, 50a-50d. However, the number of the peripheral coils is not limited thereto, and so is the number of the inverter circuitries.

More particularly speaking, the central coil 20 is connected with the inverter 48 and each of the peripheral coils 30a-30d is connected with the respective one of the inverters 50a-50d. Further, since the drive controller 60 is adapted to individually control each of the inverters 50a-50d composing the power supply 40, each of the heating coils of the IH heater 10 can separately be supplied with high-frequency current under any independent driving conditions by means of the plural inverters each corresponding to the heating coil.

The detection circuitry 62 is adapted to detect the standing situation of the pan, for example by detecting variation of the impedance of the heating coil. The drive controller 60 is operable to control any (or all) of the inverters of the power supply 40 based upon the outputs from the detection circuitry 62, so that any selected one of heating coils are supplied with high-frequency current. In other words, the drive controller 60 is operable to control the power supply 40 so that high-frequency current is suppressed or halted for any of the heating coils, over which no pan stands or exists. Therefore, the standing situation of the pan is detected by the detection circuitry 62, and each of the heating coils is supplied with high-frequency current at any desired level or amplitude that may be variable in accordance with the detected standing situation of the pan.

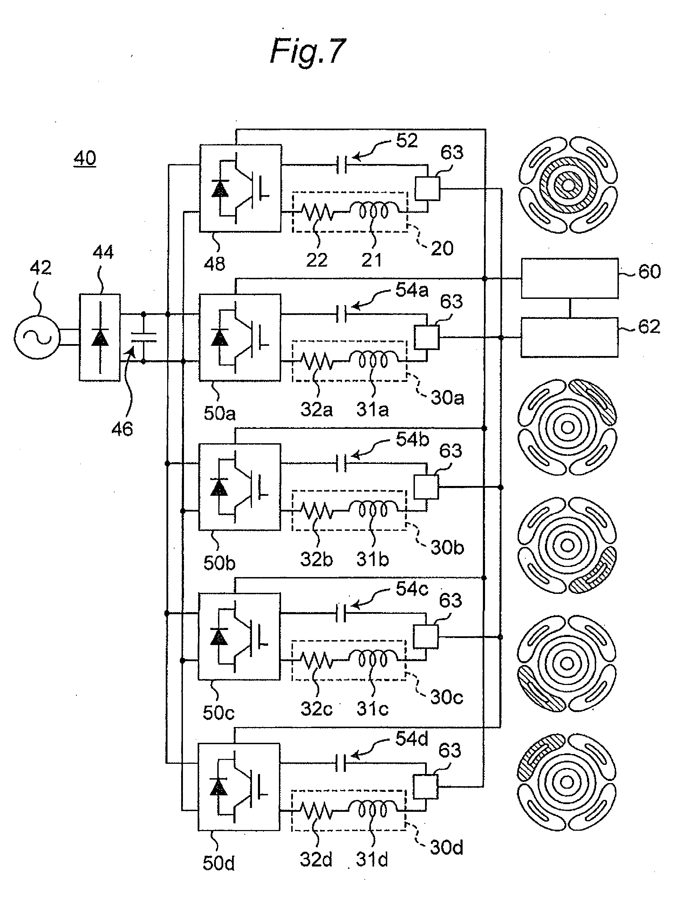

Fig. 7 is a circuit block diagram of the power supply 40 built in the induction-heating cooking system 1. The power supply 40 according to the present embodiment includes, in general, a converter 44 such as a diode bridge for converting commercial alternating current 42 into direct current, a smoothing capacitor 46 connected across the outputs of the converter 44, central and peripheral inverters 48, 50a-50d for the central coil 20 and the peripheral coils 30a-30d, respectively, both connected in parallel with the smoothing capacitor 46. The inverters 48, 50a-50d are adapted to transform the direct current from the converter 44 into the high-frequency current, for supplying the high-frequency current individually to the central coil 20 and each of the peripheral coils 30a-30d. The central coil 20 and the peripheral coils 30a-30d are represented in Fig. 7, as equivalent circuits including inductances 21, 31a-31d and resistances 22, 32a-32d, respectively. The inverters 48, 50a-50d are connected to the central coil 20 and the peripheral coils 30a-30d through resonance capacitors 21, 31a-31d resonating with the inductances 21, 31a-31d thereof, respectively, and also receive control signals from the drive controller 60 to supply the high-frequency current modulated under any driving conditions, to the central coil 20 and the peripheral coils 30a-30d.

In the meantime, an induction-heating coil has the impedance, which varies based upon existence or absence, size (covering area), and material of the heated body (pan) over the induction-heating coil, and eventually the current running through each of the inverters 48, 50a-50d varies depending upon the impedance. The detection circuitry 62 includes a current detector 63 for measuring current through the central coil 20 and each of the peripheral coils 30a-30d. Therefore, according to the present embodiment, the current detector 63 may be used for measuring the current through the central coil 20 and each of the peripheral coils 30a-30d so as to determine whether the pan **P** stands over the central coil 20 and the peripheral coils 30a-30d, or whether a covering area of the pan **P** over the central coil 20 and the peripheral coils 30a-30d is more than a threshold value, thereby precisely detecting the standing situation of the pan **P**. In the foregoing, the current detector 63 is used for detecting the standing situation of the pan **P** by detecting the current through the inverters 48, 50, this is not limited thereto, and any other detecting means such as electrical, mechanical, optical sensors may be applied for detecting the standing situation of the pan **P**.

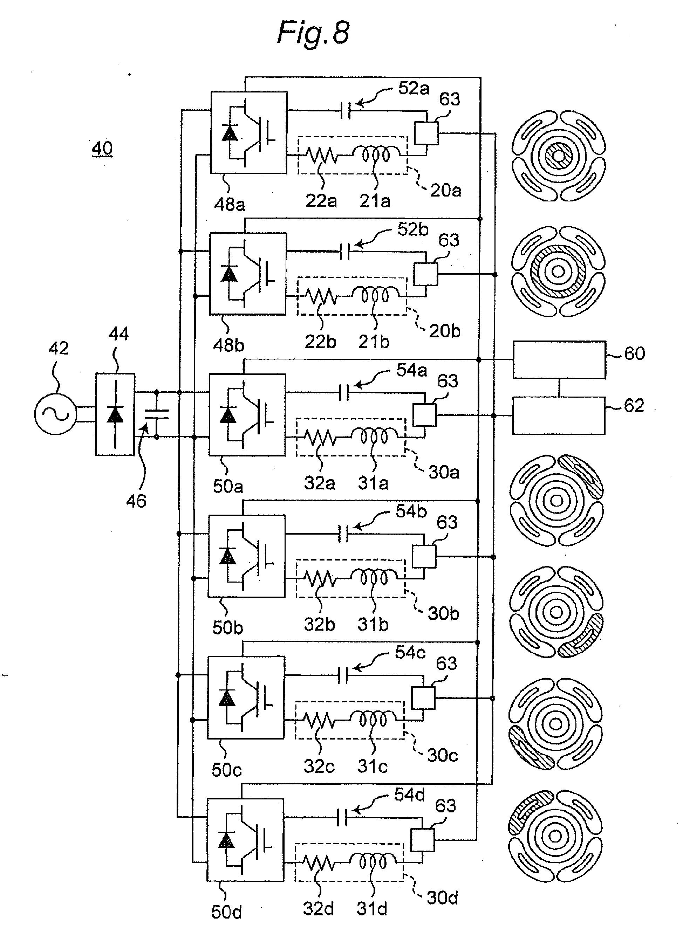

Fig. 8 is a circuit block diagram of the power supply 40 similar to that of Fig. 7, which is operable to drive individually each of the inner and outer central coils 20a, 20b connected to each other. While the power supply 40 of Fig. 8 requires separate inverters and resonance capacitors for the inner and outer central coils 20a, 20b, as each of them can be driven individually, the pan can effectively be heated based upon the standing situation when the pan is set off the central position.

As illustrated, the drive controller 60 according to the present embodiment is connected to the detection circuitry 62 so as to provide each of the inverters 48a, 48b, 50a-50d with the control signals based upon the standing situation of the pan **P**. Thus, the drive controller 60 is operable to receive signals which are output from the detection circuitry 62 regarding the current through the central coils 20a, 20b and the peripheral coils 30a-30d (indicating the standing situation of the pan **P**) and to control each of the inverters 48a, 48b, 50a-50d to stop supplying high-frequency current selectively to the heating coils 20, 30 upon determining that no pan **P** stands over the coils or that the covering area of the pan **P** over the coils is less than the threshold value. As above, according to the present embodiment of the invention, the drive controller 60 controls the power supply individually to the central coils 20a, 20b and the peripheral coils 30a-30d by providing each of the inverters 48a, 48b, 50a-50d with the control signals based upon the standing situation of the pan **P**.

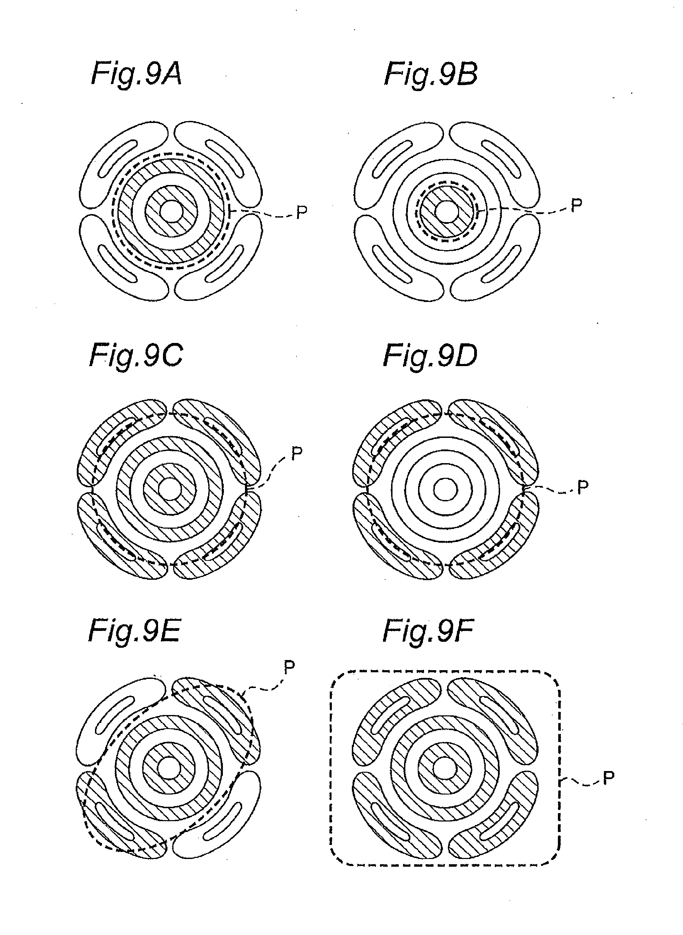

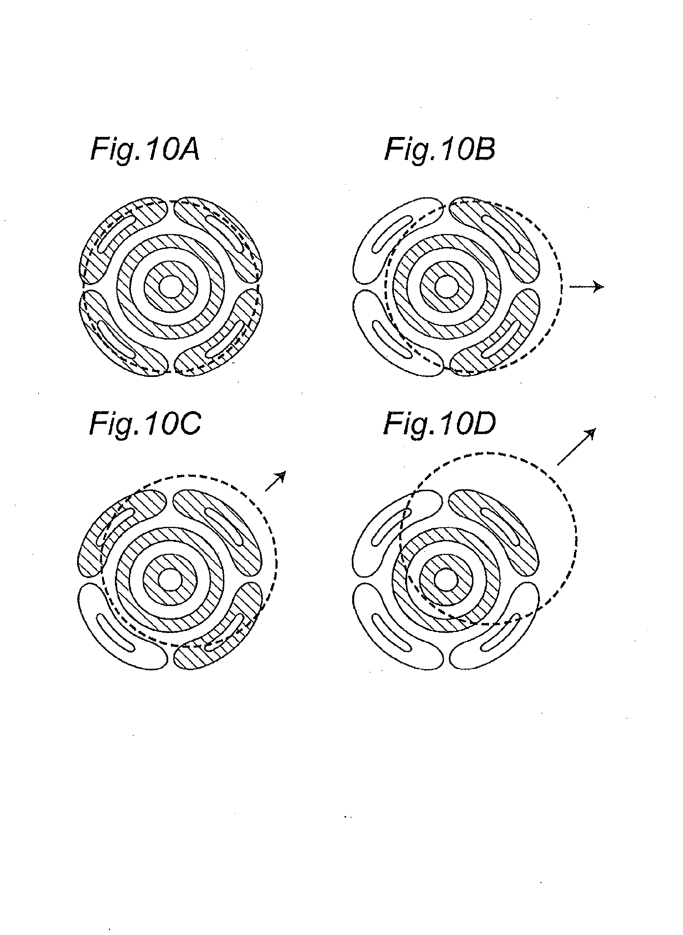

Next, an exemplary operation of the IH heater 10 will be explained below. Figs. 9 and 10 show the standing situation of the pan **P** and whether each of the central coils 20a, 20b and the peripheral coils 30a-30d is supplied with high-frequency current by the respective one of the inverters 48, 50, in which the coils marked with hatched lines are driven (ON-condition) and the others are not (OFF-condition).

In particular, Fig. 9A shows a small pan (having a diameter of about 120mm, for example) set on the top plate 3 at the proper position. In that case, the detection circuitry 62 detects the pan **P** standing only over the inner and outer central coils 20a, 20b and sends the signals regarding the standing situation to the drive controller 60 so that the drive controller controls the inverters 48a, 48b only to supply high-frequency current with the central coils 20a, 20b. Also, Fig. 9B shows a smaller pan than that of Fig. 9A (having a diameter of about 55mm, for example) set on the top plate 3 at the proper position. In that case, the detection circuitry 62 detects the pan **P** standing only over the inner central coil 20a and send the signal regarding the standing situation to the drive controller 60 to control the inverters 48a only for supplying high-frequency current with the central coils 20a.

Fig. 9C shows a pan **P** having typical size (having a diameter of about 200mm, for example) set on the top plate 3 at the proper position. In that case, the detection circuitry 62 sends to the drive controller 60 the signals regarding the standing situation indicating that the pan **P** stands over the inner and outer central coils 20a, 20b and all of the peripheral coils 30a-30d, allowing the drive controller 60 to control the inverters 48, 50 so as to supply high-frequency current with the central coils 20a, 20b, and all of the peripheral coils 30a-30d. When even larger pan **P** (having a diameter of about 300mm, for example) is set on the top plate 3 at the proper position, it can be heated by all of the heating coils as shown in Fig. 9C.

Although not limited thereto, an outer diameter of the central coil 20 may be in a range between about 100mm-140mm, and an outer diameter of the IH heater 10 including the peripheral coils 30a-30d may be in a range between about 160mm-300mm. Preferably the former may be in a range between about 110mm-130mm, and the latter may be in a range between about 180mm-260mm.

As discussed above, according to the present embodiment of the invention, since any ones of the heating coils 20, 30 are selectively driven based upon the standing situation, especially based upon the size of the pan (heated body), the pan **P** can effectively heated, and undesired magnetic filed which contributes no effect on heating the pan can be suppressed.

Fig. 9D shows an example which is not an embodiment of the invention.

Also, the pan **P** set as shown in Fig. 9D may be heated by the peripheral coils 30a-30d (ON-condition) but not by the central coils 20a, 20b (OFF-condition). This provides a new cooking approach (heating process) which allows preheating the side wall of the pan **P**.

Further, in case that the pan **P**, which has an oval shape rather than a circular shape, is set over the central coils 20a, 20b, the upper-right 30a, and the lower-left peripheral coils 30c, as shown in Fig. 9E, the detection circuitry 62 provides the drive controller 60 with the signals corresponding to the standing situation so that the drive controller 60 controls the inverters 48a, 48b, 50a, 50c (ON-condition) to supply high-frequency current with the central coils 20a, 20b, 30a, 30c only. Therefore, the lower-right and upper-left peripheral coils 30b, 30d, which cannot effectively heat the oval pan **P**, are not driven (OFF-condition) so as to achieve an energy-saving induction-heating cooking system 1 which efficiently converts electric energy to thermal energy. Also, since high-frequency current is not supplied to the peripheral coils 30b, 30d which are not covered by the pan **P**, it is possible to suppress generation of the magnetic field which makes no contribution for heating the pan **P**.

Also, in case that the pan **P** has a rectangular shape, the detection circuitry 62 is used to detect the standing situation of the pan **P**, and the drive controller 60 is used to control each of the inverters 48, 50 based upon the standing situation, to provide power supply with each of the heating coils 20, 30, thereby heating the pan **P** in an efficient manner. As above, the present embodiment of the invention provides the induction-heating cooking system 1, of which heating coils to be powered can properly be selected, thereby efficiently heating the pan **P** with any shapes.

Furthermore, as will be discussed herein in detail, even if the pan **P** is set off the proper position, the present embodiment of the invention can detect the standing situation of the pan **P** and select appropriate one(s) of the heating coils to be supplied with power based upon the standing situation of the pan **P**, thereby achieving the induction-heating cooking system 1 with improved heating efficiency.

When the pan **P** is shifted towards a right direction from the proper position shown in Fig. 10A to the deviated position shown in Fig. 10B, the detection circuitry 62 provides the drive controller 60 with the signals corresponding to the standing situation indicating that the pan **P** is set over the central coils 20a, 20b and the upper-right and lower-right heating coils 320a, 30b, and then the drive controller 60 controls the inverters 48a, 48b, 50a, 50b (ON-condition) to supply high-frequency current with the central coils 20a, 20b, 30a, 30b only.

When the pan **P** is slightly shifted towards an upper-right direction as shown in Fig. 10C, the drive controller 60 controls all of the inverters 48, 50 (ON-condition) to supply high-frequency current with all of the heating coils 20, 30 except the lower-left peripheral coil 30c. When the pan **P** is further shifted towards an upper-right direction as shown in Fig. 10D, the drive controller 60 controls the inverters 48a, 48b, 50a only (ON-condition) to supply high-frequency current with the heating coils 20a, 20b, 30a. It should be noted that this specification describes that the drive controller 60 controls the inverters to be switched on/off, the drive controller 60 may controls amplitude or duty ratio of the high-frequency current from the inverters based upon the signals output from the detection circuitry 62.

As above, even if the pan **P** stands on the top plate 3 off the proper position, the induction-heating cooking system 1 according to the present embodiment of the invention can precisely detect the standing situation of the pan **P** and select proper one(s) of the heating coils to be supplied with power, based upon the standing situation of the pan **P**. This achieves the energy-saving induction-heating cooking system 1 with improved heating efficiency and suppresses generation of the magnetic field which makes no contribution for heating the pan **P**. Also, it should be noted that arrangement of the peripheral coils 30 is not limited to that as shown in Fig. 3, the peripheral coils 30 may be arranged at positions rotated by 45 degrees in relative to the positions of Fig. 3, to which the present invention is equally applied.

The drive controller 60 may control each of the inverters 48a, 48b, 50a-50d so that current through each of the heating coils flow in the same direction along the regions adjacent and between the outer central coil 20b and the peripheral coils 30a-30d. The heat value W caused by the eddy current I within the pan along the adjacent regions is generally proportional to square of the eddy current (W = R x I², wherein R stands for resistance of the pan). Thus, the direction of the current through each of the heating coils may be conformed along the adjacent regions so that the alternating magnetic fields generated by the outer central coil 20b and the peripheral coils 30a-30d along the adjacent regions are prevented from being interfered one another, thereby increasing the eddy current I within the pan **P** and improving the heating efficiency along the substantially extended adjacent regions.

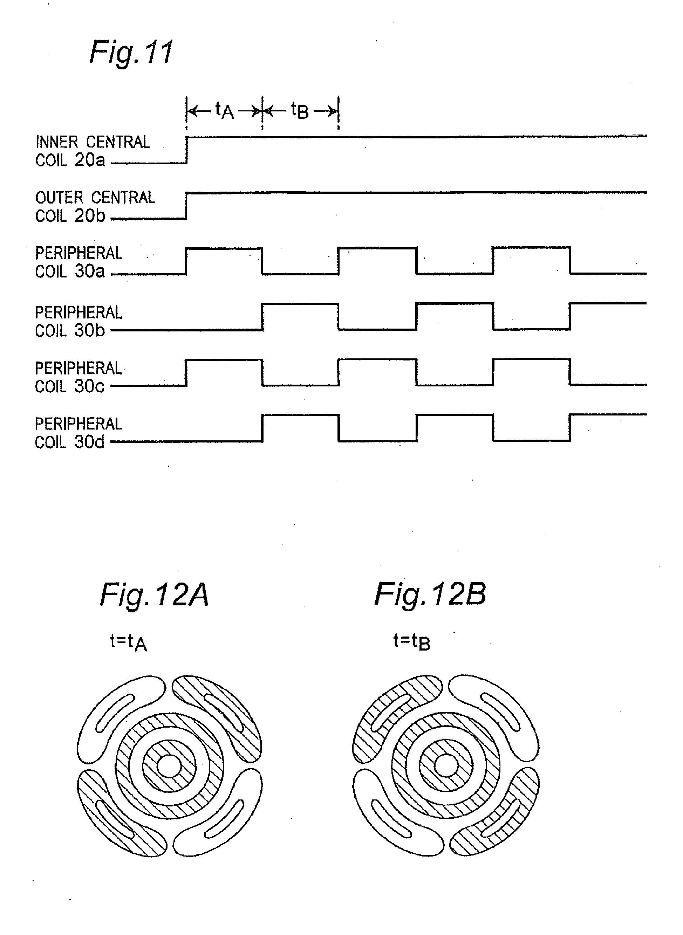

Embodiment 2. Referring to Figs. 11-19, the second embodiment of the induction-heating cooking system according to the present invention will be described herein. The induction-heating cooking system 1 of the second embodiment is similar to one of the first embodiment except that the drive controller 60 controls each of the inverters 48a, 48b, 50a-50d to be switched on/off at any desired time sequence. Thus, the duplicated description in detail for the common features will be eliminated.

As discussed above in the first embodiment of the invention, each of the inverters 48, 50 can individually be controlled based upon the standing situation (size and standing positions, etc) of the pan **P** so that the heating efficiency can be optimized and undesired magnetic field with no contribution for heating the pan can be suppressed. In addition, the drive controller 60 of the embodiment can control each of the inverters 48, 50 to supply the high-frequency current at any desired time sequence to the heating coils, thereby preventing the ingredients in the pan from being burnt.

Figs. 11, 13, 15, 16 and 18 are timing charts showing various processes for driving the inverters 48a, 48b, 50a-50d of the present embodiment. Figs. 12, 14, 17 and 19 are schematic views showing the heating coils 20a, 20b, 30a-30d supplied with high-frequency current (ON-condition) by those inverters at each of driving periods.

In an alternate driving process shown by the timing chart of Fig. 11, the drive controller 60 controls the inverters 48a, 48b to maintain the inner and outer central coils 20a, 20b in ON-condition. Also, the drive controller 60 controls the inverters 50a-50d so as to:
Step A: in the driving period t_{A}, maintain the peripheral coils 30a, 30c in ON-condition and maintain the peripheral coils 30b, 30d in OFF-condition (as shown in Fig. 12A);
Step B: in the driving period t_{B}, maintain the peripheral coils 30b, 30d in ON-condition and maintain the peripheral coils 30a, 30c in OFF-condition(as shown in Fig. 12B); and perform above Steps A and B iteratively.

In that case, as a set of the peripheral coils 30a, 30c and a set of the peripheral coils 30b, 30d heat the pan **P** alternately, a convection is generated in the ingredients containing water in the pan **P** set over the peripheral coils 30a-30d. This facilitates uniform or consistent heating of the ingredients and suppresses overheating of a portion of the ingredients thereby to prevent it from being burnt.

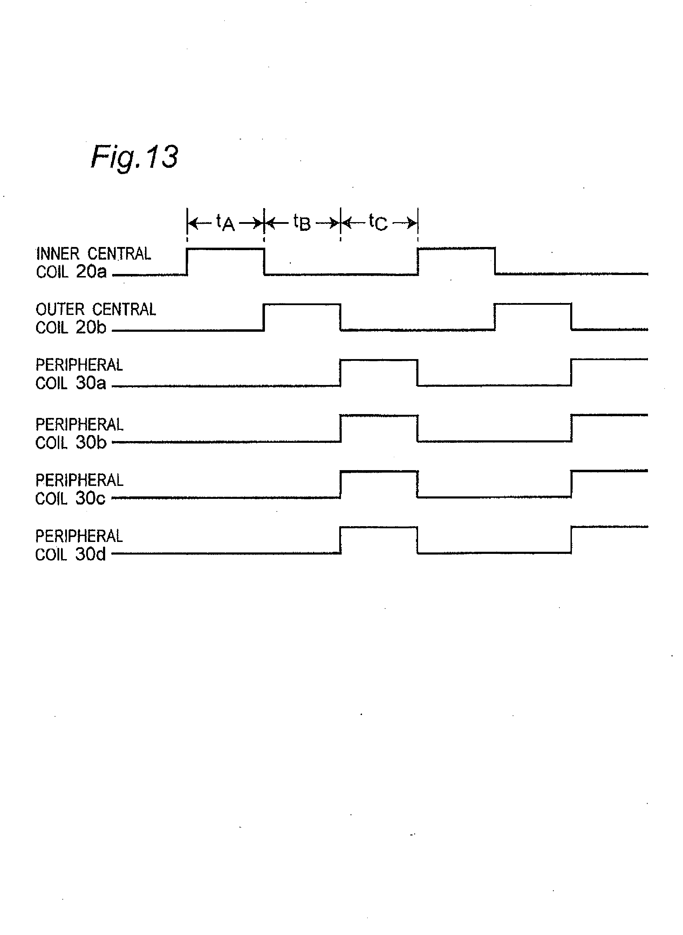

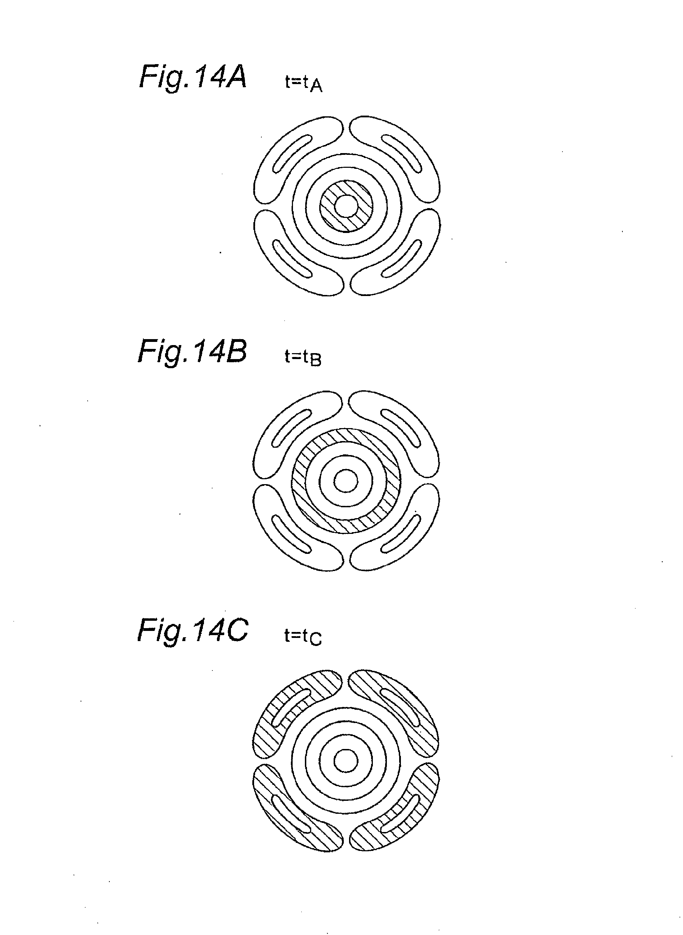

In a radially sequential driving process shown by the timing chart of Fig. 13, the drive controller 60 controls the inverters 48a, 48b 50a-50d so as to:
Step A: in the driving period t_{A}, maintain the inner central coil 20a only in ON-condition and the other heating coils in OFF-condition (as shown in Fig. 14A);
Step B: in the driving period t_{B}, maintain the outer central coil 20b only in ON-condition and the other heating coils in OFF-condition (as shown in Fig. 14B);
Step C: in the driving period t_{C}, maintain all of the peripheral coils 30a-30d in ON-condition and the central coils 20a, 20b in OFF-condition (as shown in Fig. 14C); and perform above Steps A, B and C iteratively.

In that case, as a series of the central coil 20a, the central coil 20b and peripheral coils 30a-30d heat the pan **P** in a radially sequential manner, a radial convection is generated in the ingredients containing water in the pan **P**. This also facilitates uniform heating of the ingredients and suppresses overheating of a portion of the ingredients thereby to prevent it from being burnt. It should be noted that the radial sequence is not limited thereto, any other radial sequences may be applied to achieve the similar effects.

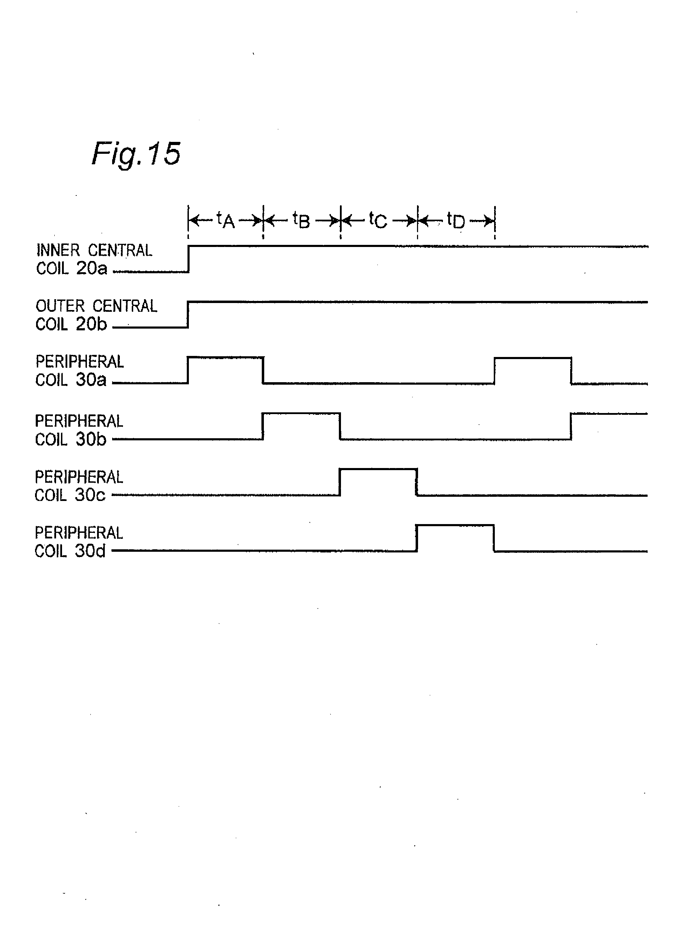

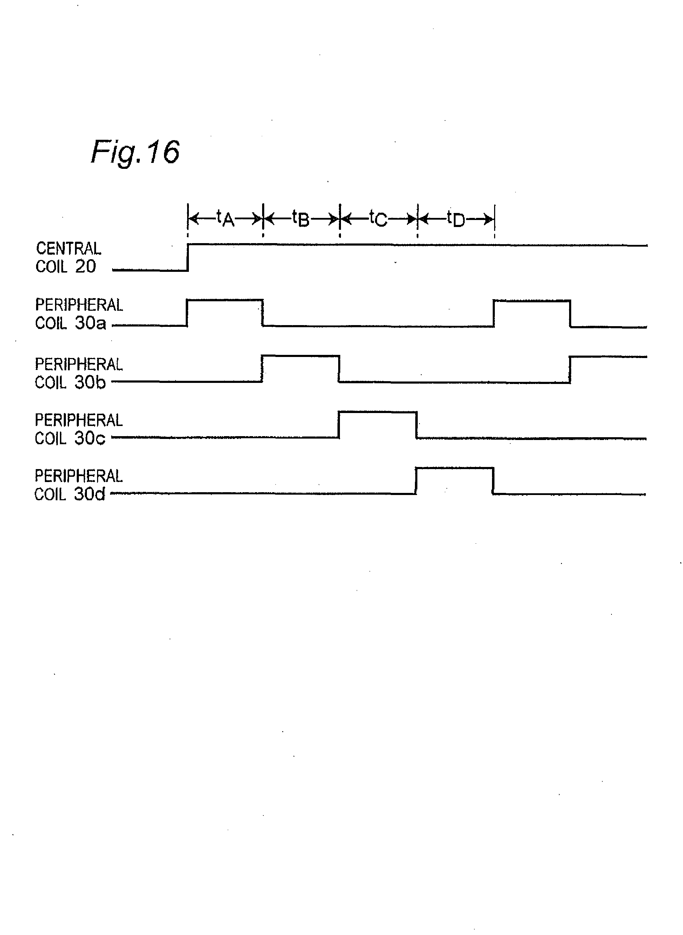

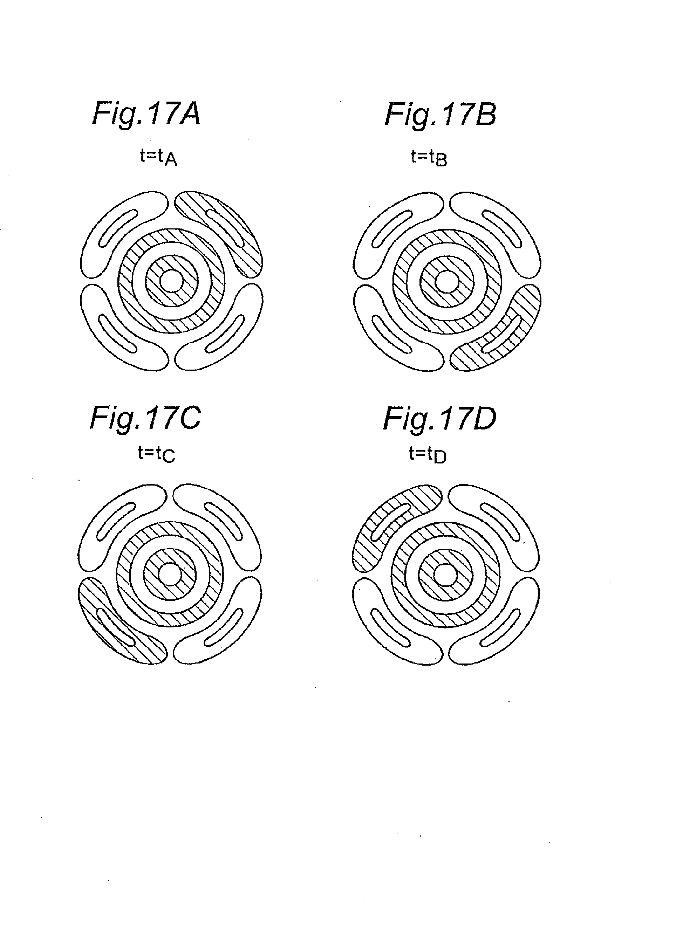

In a circumferentially sequential driving process shown by the timing chart of Figs. 15 and 16, the drive controller 60 controls the inverters 48a, 48b to maintain the inner and outer central coils 20a, 20b in ON-condition as shown in Fig. 15, or controls the inverter 48 to maintain the central coils 20a, 20b connected in series, in ON-condition as shown in Fig. 16. Further, the drive controller 60 controls the inverters 50a-50d so as to:
Step A: in the driving period t_{A}, maintain the peripheral coil 30a in ON-condition and the other peripheral coils 30b-30d in OFF-condition (as shown in Fig. 17A);
Step B: in the driving period t_{B}, maintain the peripheral coil 30b in ON-condition and the other peripheral coils 30a, 30c, 30d in OFF-condition (as shown in Fig. 17B);
Step C: in the driving period t_{C}, maintain the peripheral coil 30c in ON-condition and the other peripheral coils 30a, 30b, 30d in OFF-condition (as shown in Fig. 17C);
Step D: in the driving period t_{D}, maintain the peripheral coil 30d in ON-condition and the other peripheral coils 30a-30c in OFF-condition (as shown in Fig. 17D); and perform above Steps A-D iteratively.

In that case, as a series of the peripheral coils 30a-30d heat the pan **P** in a circumferentially sequential manner, a circumferential convection is generated in the ingredients containing water in the pan **P**. Thus, this facilitates uniform heating of the ingredients and suppresses overheating of a portion of the ingredients thereby to prevent it from being burnt. It should be noted that the circumferential sequence is not limited thereto, any other circumferential sequences may be applied to achieve the similar advantages.

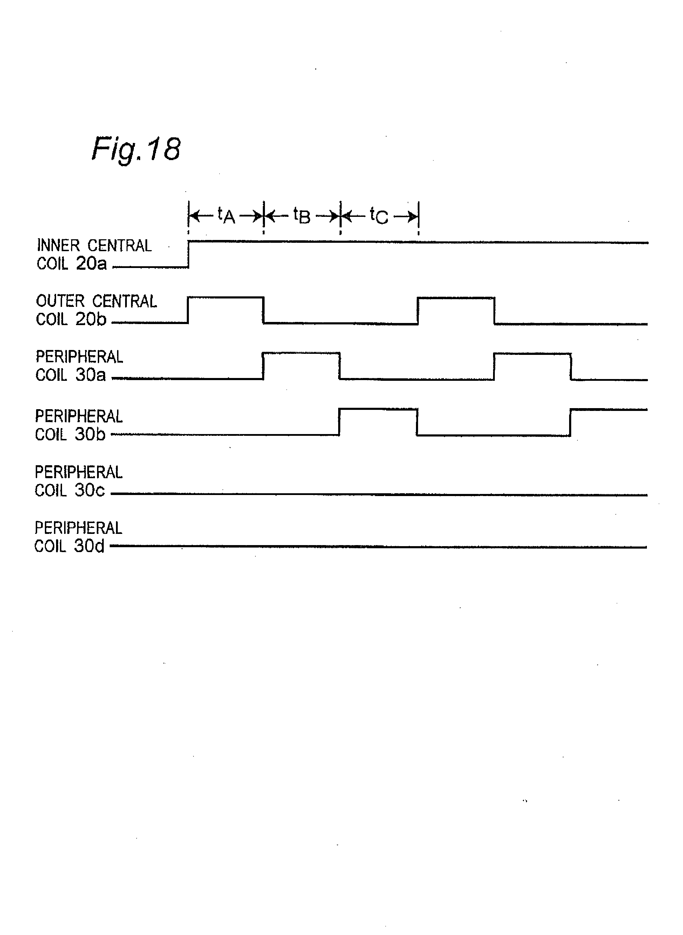

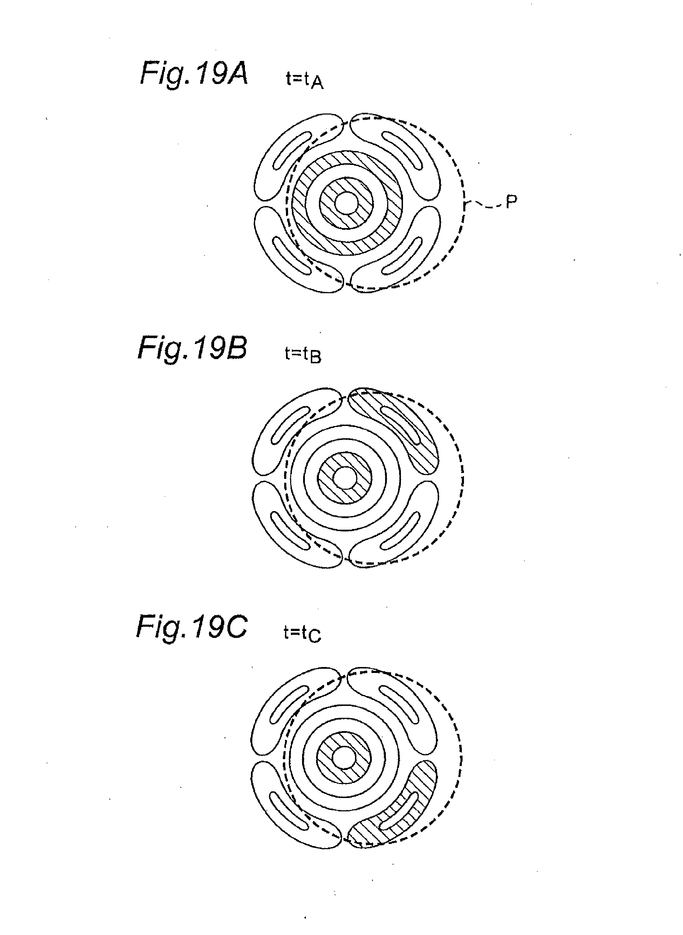

Each of the above-mentioned driving processes can equally be applied to the induction-heating cooking system according to the first embodiment. Thus, if the pan **P** is set off the center towards the right, as shown in Fig. 19, the peripheral coils 30c, 30d are kept in OFF-condition. However, in a sequential driving process for driving the pan set off the center, shown by the timing chart of Fig. 18, the drive controller 60 controls the inverter 48a to maintain the inner central coil 20a in ON-condition and also controls the inverters 48a, 48b, 50a-50d so as to:
Step A: in the driving period t_{A}, maintain the outer central coil 20b in ON-condition and the peripheral coils 30a-30d in OFF-condition (as shown in Fig. 19A);
Step B: in the driving period t_{B}, maintain the peripheral coil 30a in ON-condition, and maintain the outer central coil 20b and the peripheral coils 30b-30d in OFF-condition (as shown in Fig. 19B);
Step C: in the driving period t_{C}, maintain the peripheral coil 30b in ON-condition, and maintain the outer central coil 20b and the peripheral coils 30a, 30c, 30d in OFF-condition (as shown in Fig. 19C); and perform above Steps A-C iteratively.

In that case, as a series of the outer central coil 20b and the peripheral coils 30a, 30b heat the pan **P** in a sequential manner, a circumferential convection is generated in the ingredients containing water in the pan **P**. Thus, even if the pan is set off the center, the circumferential convection in a given direction facilitates uniform heating of the ingredients and suppresses overheating of a portion of the ingredients thereby to prevent it from being burnt.

It should be noted that although the foregoing description and drawings are made as each of the driving periods t_{A}-t_{D} has a constant time duration, those periods may have adjustable time durations depending upon arrangement and area of the heating coils 20, 30 covered by the pan **P**. For example, in the off-set sequential driving process of Fig. 18, the time durations t_{B}, t_{C} may be longer than the time duration t_{A}. Also, the foregoing discusses only the time durations of ON- and OFF-conditions, each of the heating coils may be supplied with the high-frequency current having different amplitude.

Similar to the first embodiment, the peripheral coils 30 of the second embodiment may be arranged at positions rotated by 45 degrees in relative to the positions of Fig. 3, to which the present invention is equally applied.

## Claims

1. An induction-heating cooking system, comprising:
a central coil (20) convolved in a planar circular configuration;
a plurality of peripheral coils (30) having a quarter circle arc configuration arranged around and adjacent said central coil (20);
a plurality of inverter circuitries (48, 50) for supplying high-frequency current to said central coil (20) and each one of said peripheral coils (30) individually;
detecting means (62) for detecting the existence or absence of a heated body (**P**) over said central coil (20) and each one of said peripheral coils (30); and
a drive controller (60) adapted to control said inverter circuitries (48, 50) so that said central coil (20) and each one of said peripheral coils (30) are selectively supplied with the high-frequency current, when said detecting means (62) detects that the heated body (**P**) is set over each one of said central coil (20) and said peripheral coils (30), or that a covering area of the heated body (**P**) over each one of said central coil (20) and said peripheral coils (30) is greater than a given value,
wherein when said detecting means (62) detects that the heated body (**P**) is set over said central coil (20) and each one of said peripheral coils (30), or that a covering area of the heated body (**P**) over said central coil (20) and each one of said peripheral coils (30) are greater than a given value, said drive controller (60) is adapted to control said inverter circuitries (48, 50) so as to supply said central coil (20) and each one of said peripheral coils (30) with the high-frequency current having a desired amplitude depending upon a covering area of the heated body (**P**) over said central coil (20) and each one of said peripheral coils (30),
the induction-heating cooking system being **characterised in that**
said drive controller (60) controls said inverter circuitries (48, 50) so that said central coil (20) is always supplied with the high-frequency current and said peripheral coils (30) are alternately supplied with the high-frequency current according to a timing sequence that generates a convection in the contents of the heated body (**P**).

2. The induction-heating cooking system according to claim 1, wherein said central coil (20) includes an inner central coil (20a) and an outer central coil (20b) and wherein the number of said peripheral coils is greater than that of said central coil.

3. The induction-heating cooking system according to claim 1, wherein said central coil (20) is adapted to heat the single heated body (**P**) in conjunction with said peripheral coils (30) heats.

4. The induction-heating cooking system according to claim 3, wherein said central coil (20) has an outer diameter in a range between about 100mm and 140mm, and wherein said central coil (20) and said peripheral coils (30) heats have an outer diameter in a range between about 160mm and 300mm.

5. The induction-heating cooking system according to claim 1, wherein said detecting means (62) is adapted to detect impedance of said central coil (20) and said peripheral coils (30), thereby to detect the standing situation of the heated body (**P**).

6. The induction-heating cooking system according to claim 1, wherein a plurality of said central coils (20) and said peripheral coils (30) are arranged along a radial direction, and wherein said drive controller (60) is adapted to control said inverter circuitries (48, 50) so that each one of said central coils (20) and said peripheral coils (30) is supplied in a radially sequential manner.

7. The induction-heating cooking system according to claim 1, wherein a plurality of said peripheral coils (30) are arranged along a circumferential direction, and wherein said drive controller (60) is adapted to control said inverter circuitries (48, 50) so that each one of said peripheral coils (30) is supplied in a circumferentially sequential manner.

8. The induction-heating cooking system according to claim 1,
wherein each of said peripheral coils (30) has an inner portion opposing to said central coil (20), the inner portion being contoured along with said central coil.

## Patentansprüche

1. Induktionswärme-Kochsystem, welches umfasst:
eine Mittenspule (20), welche in einer ebenen, kreisförmigen Konfiguration zusammengerollt ist;
eine Mehrzahl von umfänglichen Spulen (30), welche eine viertelkreisförmige Konfiguration haben, welche um die Mittenspule (20) herum und hierzu angrenzend angeordnet sind;
eine Mehrzahl von Inverterschaltungen (48, 50) zum individuellen Versorgen der Mittenspule (20) und jeder der umfänglichen Spulen (30) mit einem hochfrequenten Strom;
ein Erfassungselement (62) zum Erfassen des Vorliegens oder Nicht-Vorliegens von einem zu erwärmenden Körper (P) oberhalb der Mittenspule (20) und jeder der umfänglichen Spulen (30); und
eine Antriebssteuerung (60), welche dazu ausgebildet ist, die Inverterschaltungen (48, 50) derart zu steuern, dass die Mittenspule (20) und jede der umfänglichen Spulen (30) selektiv mit dem hochfrequenten Strom versorgt werden, sobald das Erfassungselement (62) erfasst, dass der zu erwärmende Körper (P) über sowohl der Mittenspule (20) als auch den umfänglichen Spulen (30) platziert ist, oder dass ein Abdeckungsbereich von dem zu erwärmenden Körper (P) über sowohl der Mittenspule (20) als auch den umfänglichen Spulen (30) größer ist als ein vorgegebener Wert,
wobei, wenn das Erfassungselement (62) erfasst, dass der zu erwärmende Körper (P) über der Mittenspule (20) und jeder der umfänglichen Spulen (30) platziert ist, oder dass ein Abdeckungsbereich von dem zu erwärmenden Körper (P) über der Mittenspule (20) und jeder der umfänglichen Spulen (30) größer ist als ein vorgegebener Wert, die Antriebssteuerung (60) dazu ausgebildet ist, die Antriebsschaltungen (48, 50) derart zu steuern, dass die Mittenspule (20) und jede der umfänglichen Spulen (30) mit dem hochfrequenten Strom versorgt wird, welcher eine gewünschte Amplitude hat, und zwar in Abhängigkeit von einem Abdeckungsbereich von dem zu erwärmenden Körper (P) oberhalb der Mittenspule (20) und jeder der umfänglichen Spulen (30), wobei das Induktionswärme-Kochsystem **dadurch gekennzeichnet ist, dass**
die Antriebssteuerung (60) die Inverterschaltungen (48, 50) derart steuert, dass die Mittenspule (20) stets mit dem hochfrequenten Strom versorgt wird und die umfänglichen Spulen (30) abwechselnd mit dem hochfrequenten Strom versorgt werden, und zwar gemäß einer Zeitsequenz, welche eine Konvektion in den Materialien des zu erwärmenden Körpers (P) erzeugt.

2. Induktionswärme-Kochsystem nach Anspruch 1, wobei die Mittenspule (20) eine innere Mittenspule (20a) und eine äußere Mittenspule (20b) umfasst, und wobei die Anzahl der umfänglichen Spulen größer ist als die Anzahl der Mittenspulen.

3. Induktionswärme-Kochsystem nach Anspruch 1, wobei die Mittenspule (20) dazu ausgebildet ist, den einzelnen zu erwärmenden Körper (P) in Verbindung mit Heizflächen der umfänglichen Spulen (30) zu erwärmen.

4. Induktionswärme-Kochsystem nach Anspruch 3, wobei die Mittenspule (20) einen Außendurchmesser in einem Bereich zwischen ungefähr 100 mm und 140 mm hat, und wobei die Heizflächen der Mittenspule (20) und der umfänglichen Spulen (30) einen Außendurchmesser in einem Bereich zwischen ungefähr 160 mm und 300 mm haben.

5. Induktionswärme-Kochsystem nach Anspruch 1, wobei das Erfassungselement (62) dazu ausgebildet ist, eine Impedanz von der Mittenspule (20) und der umfänglichen Spulen (30) zu erfassen, um hierdurch den Platzierungs-Zustand von dem zu erwärmenden Körper (P) zu erfassen.

6. Induktionswärme-Kochsystem nach Anspruch 1, wobei eine Mehrzahl der Mittenspulen (20) und der umfänglichen Spulen (30) entlang einer radialen Richtung angeordnet sind, und wobei die Antriebssteuerung (60) dazu ausgebildet ist, die Inverterschaltungen (48,50) derart zu steuern, dass sowohl die Mittenspulen (20) als auch die umfänglichen Spulen (30) in einer radial sequenziellen Art und Weise versorgt werden.

7. Induktionswärme-Kochsystem nach Anspruch 1, wobei eine Mehrzahl der umfänglichen Spulen (30) entlang einer Umfangsrichtung angeordnet sind, und wobei die Antriebssteuerung (60) dazu ausgebildet ist, die Inverterschaltungen (48, 50) derart zu steuern, dass jede der umfänglichen Spulen (30) in einer umfänglichen sequenziellen Art und Weise versorgt werden.

8. Induktionswärme-Kochsystem nach Anspruch 1, wobei jede der umfänglichen Spulen (30) einen Innenabschnitt hat, welcher der Mittenspule (20) gegenüberliegt, wobei der Innenabschnitt der Kontur von der Mittenspule folgt.

## Revendications

1. Système de cuisson - chauffage par induction, comprenant :
une bobine centrale (20) enroulée en une configuration circulaire plane ;
une pluralité de bobines périphériques (30) qui présentent une configuration en quart d'arc de cercle, agencées autour de la bobine centrale (20) et adjacentes à celle-ci ;
une pluralité de circuits onduleurs (48, 50) destinés à fournir un courant à haute fréquence à ladite bobine centrale (20) et à chacune desdites bobines périphériques (30) de manière individuelle ;
des moyens de détection (62) destinés à détecter la présence ou l'absence d'un corps chauffé (P) sur ladite bobine centrale (20) et sur chacune desdites bobines périphériques (30) ; et
un contrôleur (60) adapté de façon à commander lesdits circuits onduleurs (48, 50) de telle sorte que ladite bobine centrale (20) et chacune desdites bobines périphériques (30) soient alimentées de manière sélective avec le courant à haute fréquence, lorsque lesdits moyens de détection (62) détectent que le corps chauffé (P) est placé sur chacune de ladite bobine centrale (20) et desdites bobines périphériques (30), ou que la surface de couverture du corps chauffé (P) sur chacune de ladite bobine centrale (20) et desdites bobines périphériques (30), est supérieure à une valeur donnée ;
dans lequel, lorsque moyens de détection (62) détectent que le corps chauffé (P) est placé sur ladite bobine centrale (20) et sur chacune desdites bobines périphériques (30), ou que la surface de couverture du corps chauffé (P) sur ladite bobine centrale (20) et sur chacune desdites bobines périphériques (30), est supérieure à une valeur donnée, ledit contrôleur (60) est adapté de façon à commander lesdits circuits onduleurs (48, 50) de façon à fournir à ladite bobine centrale (20) et à chacune desdites bobines périphériques (30) le courant à haute fréquence qui présente une amplitude souhaitée selon l'aire de couverture du corps chauffé (P) sur ladite bobine centrale (20) et sur chacune desdites bobines périphériques (30) ;
le système de cuisson par induction étant **caractérisé en ce que** ledit contrôleur (60) commande lesdits circuits onduleurs (48, 50) de telle sorte que ladite bobine centrale (20) soit toujours alimentée avec le courant à haute fréquence et que lesdites bobines périphériques (30) soient alimentées de manière alternée avec le courant à haute fréquence selon une séquence de synchronisation qui génère une convection dans le contenu du corps chauffé (P).

2. Système de cuisson - chauffage par induction selon la revendication 1, dans lequel ladite bobine centrale (20) comprend une bobine centrale intérieure (20a) et une bobine centrale extérieure (20b), et dans lequel le nombre desdites bobines périphériques est supérieur à celui de ladite bobine centrale.

3. Système de cuisson - chauffage par induction selon la revendication 1, dans lequel ladite bobine centrale (20) est adaptée de façon à chauffer le corps chauffé (P) en association avec l'ensemble desdites bobines périphériques (30).

4. Système de cuisson - chauffage par induction selon la revendication 3, dans lequel ladite bobine centrale (20) présente un diamètre extérieur qui se situe dans une plage comprise entre 100 mm et 140 mm environ, et dans lequel l'ensemble de ladite bobine centrale (20) et desdites bobines périphériques (30) présente un diamètre extérieur qui se situe dans une plage comprise entre 160 mm et 300 mm environ.

5. Système de cuisson - chauffage par induction selon la revendication 1, dans lequel lesdits moyens de détection (62) sont adaptés de manière à détecter l'impédance de ladite bobine centrale (20) et desdites bobines périphériques (30), de manière à détecter de ce fait la situation permanente du corps chauffé (P).

6. Système de cuisson - chauffage par induction selon la revendication 1, dans lequel une pluralité desdites bobines centrales (20) et desdites bobines périphériques (30), sont agencées le long d'une direction radiale, et dans lequel ledit contrôleur (60) est adapté de façon à commander lesdits circuits onduleurs (48, 50) de telle sorte que chacune desdites bobines centrales (20) et desdites bobines périphériques (30), soit alimentée de façon séquentielle de manière radiale.

7. Système de cuisson - chauffage par induction selon la revendication 1, dans lequel une pluralité desdites bobines périphériques (30) sont agencées le long d'une direction circonférentielle, et dans lequel ledit contrôleur (60) est adapté de façon à commander lesdits circuits onduleurs (48, 50) de telle sorte que chacune desdites bobines périphériques (30), soit alimentée de façon séquentielle de manière circonférentielle.

8. Système de cuisson - chauffage par induction selon la revendication 1, dans lequel chacune desdites bobines périphériques (30) présente une partie intérieure opposée à ladite bobine centrale (20), la partie intérieure suivant les contours de ladite bobine centrale.
